(19) Europäisches Patentamt
European Patent Office
Office européen des brevets

(11) **EP 3 317 619 B1**

(12) **EUROPÄISCHE PATENTSCHRIFT**

(45) Veröffentlichungstag und Bekanntmachung des Hinweises auf die Patenterteilung:
**08.04.2020   Patentblatt 2020/15**

(51) Int Cl.:
*G01G 11/04* (2006.01)    *G01G 11/00* (2006.01)

(21) Anmeldenummer: **16731561.3**

(22) Anmeldetag: **16.06.2016**

(86) Internationale Anmeldenummer:
**PCT/EP2016/063846**

(87) Internationale Veröffentlichungsnummer:
**WO 2017/001203 (05.01.2017 Gazette 2017/01)**

(54) **VERFAHREN UND VORRICHTUNG ZUM BESTIMMEN EINES SPEZIFISCHEN ENERGIEVERBRAUCHS VON GURTFÖRDERERN**

METHOD AND APPARATUS FOR DETERMINING A SPECIFIC ENERGY CONSUMPTION OF BELT CONVEYORS

PROCÉDÉ ET DISPOSITIF DE DÉTERMINATION D'UNE CONSOMMATION D'ÉNERGIE SPÉCIFIQUE DE CONVOYEURS À BANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2015   DE 102015212267**

(43) Veröffentlichungstag der Anmeldung:
**09.05.2018   Patentblatt 2018/19**

(73) Patentinhaber: **Voith Patent GmbH 89522 Heidenheim (DE)**

(72) Erfinder: **ZIEGLER, Manfred 50374 Erftstadt (DE)**

(74) Vertreter: **Voith Patent GmbH - Patentabteilung St. Pöltener Straße 43 89522 Heidenheim (DE)**

(56) Entgegenhaltungen:
WO-A1-2008/083809       AU-A1- 2007 343 372
DE-A1-102007 002 015

**Beschreibung**

Die Erfindung betrifft ein Verfahren und eine Vorrichtung zum Bestimmen eines Energieverbrauchs oder Widerstands von Gurtförderern.

Beim Betreiben von Gurtförderern ist der Energieverbrauch größter Kostenfaktor. Es ist daher von großem Interesse, diesen Energieverbrauch gering zu halten. Einzelne Gurtförderer unterscheiden sich zum Teil erheblich hinsichtlich des spezifischen Energiebedarfs zum Materialtransport. Neben konstruktiven Einflüssen wie Muldungswinkel, Tragrollenabstand und Tragrollendurchmesser etc., die im Nachhinein nur noch mit großem Aufwand geändert werden können, haben die eingesetzten Gurte und der Wartungszustand der Anlage den größten Einfluss auf einen horizontalen Bewegungswiderstand einer Gurtförderanlage und damit auf den beeinflussbaren Energieverbrauch.

Gurte unterschiedlicher Hersteller und/oder unterschiedlicher Gummimischungen erzeugen zum Teil deutlich verschiedene Bewegungswiderstände, wie ausgeführt ist in Hintz, A.: "Einfluß des Gurtaufbaus auf den Energieverbrauch von Gurtförderanlagen", Dissertation Universität Hannover 1993, [1] Geesmann, F.O.: "Experimentelle und theoretische Untersuchungen der Bewegungswiderstände von Gurtförderanlagen", Dissertation Universität Hannover 2001 und Ziegler, M.: "Energetische Optimierung von Fördergurten bei der RWE Power AG", World of Mining 6/2009. Die Betreiber von Gurtförderanlagen haben daher ein großes Interesse daran, Gurte einzusetzen, die diesbezüglich besonders günstig sind. Bislang fehlt eine allgemein anerkannte Methode, die Gurte diesbezüglich zu beurteilen und damit dem Anwender ein wichtiges Auswahlkriterium zu geben. Erst recht ist es nicht möglich, mit vertretbarem Aufwand den Bewegungswiderstand der Gurte im laufenden Betrieb allgemein zu ermitteln. Diesbezüglich gibt es zwei Messtraggerüste in Gurtförderanlagen in Tagebauen der RWE Power AG, die auf der Arbeit von [1] basieren und die für die eingesetzten Gurte den Bewegungswiderstand als Funktion der Auflast messen. Es gibt einen Prüfstand zur Ermittlung eines Eindrückrollwiderstands von Fördergurten gemäß DIN 22123 am Institut für Transport- und Automatisierungstechnik an der Universität Hannover. Der klimatisierte Prüfstand liefert ein Maß für den Bewegungswiderstand des gemessenen Gurtes bei einer bestimmten Auflast, Geschwindigkeit, Tragrollendurchmesser und Umgebungstemperatur. Messreihen unterschiedlicher Gurte und ihre mathematische Nachbildung sind dabei mit einem Exponentialansatz $F'_G = a * F'^b_O$ messbar bzw. nachbildbar. Bei Vergleichen korrelierte der ermittelbare Eindrückrollwiderstand jedoch nur schlecht mit den betrieblichen Messungen nach [1]. So war eine Gurtqualität im Betriebsversuch deutlich schlechter als eine andere Gurtqualität, die bei gleicher Auflast in der Prüfstandmessung einen höheren Laufwiderstand aufwies. Ursache hierfür ist die bei dieser Art der Messung auftretende Verformung der Kontaktzone, die sich deutlich von einer Beanspruchung im Betrieb unterscheidet. Bei der Messung wird eine Trommel als Widerlager zur Messtragrolle eingesetzt, wodurch das Gummi der Laufplatte sich nicht nach oben verformen kann und die Eigenschaften des Kerngummis und der Deckplatte unberücksichtigt bleiben. Die Klassifizierung eines Gurtes nach DIN 22123 gibt dem Anwender also nur einen schlechten Anhaltspunkt über den zu erwartenden Energieverbrauch bei Verwendung dieses Gurtes im Vergleich zu einem anderen. Außerdem hat der Anwender keine Möglichkeit, entsprechende Aussagen seines Gurtlieferanten im Betrieb zu überprüfen - es sei denn, er verfügt über eine entsprechend aufwändige Messvorrichtung nach [1].

WO 2008/083809 A1 [2] beschreibt ein Verfahren zur Ermittlung des spezifischen Gesamt-Energieverbrauchs einer im Betrieb befindlichen Gurtbandförderanlage für Schüttgut bei nicht-konstanter Belastung und stellt einen einzelnen Gütefaktor für die Gesamtanlage bereit. Durch Korrelation der Beladungsverteilung mit dem Profil einer Bandanlage kann dabei deren spezifischer Bewegungswiderstand im Betrieb gemessen werden, wodurch schleichende Veränderungen - etwa infolge Verschlechterung des Ausrichtzustands - erkannt und Gegenmaßnahmen eingeleitet werden können. Mit diesem Verfahren kann ganz allgemein die energetische Effizienz einer Bandanlage im Vergleich zu einem früheren Zeitpunkt oder zu anderen Bandanlagen angegeben werden. Jedoch können Einflüsse, die zu der aktuell gemessenen Effizienz beitragen, nicht separat erfasst und angegeben werden. Insbesondere ist es damit weder möglich, die Güte der eingesetzten Gurte hinsichtlich ihres spezifischen Bewegungswiderstands zu beurteilen und die einzelnen Gurte untereinander zu vergleichen, noch dem Betreiber gezielte Hinweise zu geben, welche Anlagenabschnitte einen besonders hohen Beitrag zum Energieverbrauch haben und bevorzugt einer Verbesserung zum Beispiel ihres Ausrichtzustands bedürfen.

Von verschiedenen Aspekten des Wartungszustands einer Gurtförderanlage hat die Ausrichtung einzelner Tragrollenstationen besonderen Einfluss auf den tatsächlichen Energieverbrauch. Wird dieser als zu hoch erkannt, z.B. durch ein Effizienzmonitoring, so ist eine Inspektion durch qualifiziertes Fachpersonal erforderlich, um Ausrichtfehler aufzuspüren und zu beseitigen.

Der Erfindung liegt daher die Aufgabe zugrunde, ein Verfahren bzw. eine Vorrichtung anzugeben, das Einzeleinflüsse wie den Beitrag der einzelnen Gurte und/oder Bandabschnitte darstellt. Dabei umfasst ein Gurtförderer bzw. eine Gurtförderanlage einen Fördergurt. Der Fördergurt besteht aus einzelnen Fördergurtteilstücken. Diese einzelnen Fördergurtteilstücke können sich in ihren Eigenschaften unterscheiden. Auch ist die Förderstrecke der Gurtförderanlage in einzelne Anlagenabschnitte unterteilbar. Insbesondere liegt der Erfindung die Aufgabe zu Grunde, eine Vorrichtung und ein Verfahren bereitzustellen, um im laufenden Betrieb Fördergurtteilstücke zu identifizieren, die einen geringen Energieverbrauch bedingen und/oder Anlagenabschnitte zu identifizieren, die einen hohen Energieverbrauch aufweisen.

Weiterhin ist es insbesondere die Aufgabe der Erfindung, ein Verfahren und eine Vorrichtung bereitzustellen, womit im laufenden Betrieb eine Anzeige besonders wartungsbedürftiger Anlagenabschnitte möglich ist.

Die erfindungsgemäße Lösung ist durch die Merkmale des unabhängigen Vorrichtungsanspruchs 1 und des unabhängigen Verfahrensanspruchs 7 charakterisiert. Vorteilhafte Ausgestaltungen sind in den Unteransprüchen wiedergegeben.

Weitere in der Beschreibung ausgeführte Aspekte können eigenständige erfinderische Details darstellen.

Der erfindungsgemäße Gurtförderer weist mindestens eine Steuereinrichtung und mindestens einen Antrieb zum Antreiben eines Fördergurtes auf. Der Fördergurt besteht aus Fördergurtteilstücken. Aus den Fördergurtteilstücken ist ein Fördergurt gebildet, wobei die Fördergurtteilstücke mittels Verbindungsabschnitte miteinander verbunden sind. Zur Lagerung des Fördergurtes ist mindestens eine Tragrolle vorgesehen. Zur Erfassung des Energieverbrauchs des mindestens einen Antriebs ist eine erste Sensorik vorgesehen. Weiterhin ist eine zweite Sensorik zur Erfassung einer einem Abschnitt des Fördergurtes zuordbaren Beladung vorgesehen. Durch eine dritte Sensorik werden die Verbindungsabschnitte zwischen den Fördergurtteilstücken detektiert. Die Signale der Sensoriken werden der Steuereinrichtung zugeführt. Anstelle des einen Antriebs können mehrere Antriebe vorgesehen sein. Die Antriebe sind mit jeweils einem zur ersten Sensorik gehörenden ersten Sensor versehen, der den Energieverbrauch des jeweiligen Antriebs detektiert. Diese Signale der ersten Sensoren werden der Steuereinrichtung zugeleitet.

Durch die vorgesehene Sensorik ist es möglich, einen berechneten Energieverbrauch, der im Folgenden als Leistungsbedarf bezeichnet wird, unter

Berücksichtigung einer Beladung und Beladungsverteilung, mit einem tatsächlichen gemessenen Energieverbrauch zu vergleichen. Durch Berücksichtigung der Fördergurtteilstücke oder in Bezug auf die Anlagenabschnitte unter Anwendung von mathematischen Verfahren, ist es möglich, den berechneten Leistungsbedarf mit dem tatsächlichen gemessenen Energieverbrauch in Übereinstimmung zu bringen. Es ist auch möglich, zum einen den Energieverbrauch mit dem Leistungsbedarf in Bezug auf die Fördergurtteilstücke als auch den Leistungsbedarf und den gemessenen Energieverbrauch bezogen auf Anlagenabschnitte in Übereinstimmung zu bringen.

Zum einen kann im laufenden Betrieb aus einer Abweichung bezogen auf die einzelnen Fördergurtteilstücke ermittelt werden, welche Arten oder welches eingesetzte Fördergurtteilstück in der Anlage besonders geeignet sind und einen geringen Energieverbrauch bedingen und welche Fördergurtteilstücke einen hohen Energieverbrauch bedingen.

Durch die Ermittlung, welche Anlagenabschnitte einen besonders hohen Energieverbrauch im Vergleich zu einem errechneten Leistungsbedarf aufweisen, können wartungsbedürftige Anlagenabschnitt im laufenden Betrieb ermittelt werden.

In einer vorteilhaften Ausführungsform ist vorgesehen, dass die dritte Sensorik mindestens einen Sensor zur Erfassung der Druckfedersteifigkeit des Fördergurtes umfasst. Durch Detektion der Druckfedersteifigkeit können Verbindungsabschnitte zwischen zwei Fördergurtteilstücken detektiert werden. Die Verbindungsabschnitte weisen eine erhöhte Druckfedersteifigkeit auf, so dass bei Detektion einer erhöhten Druckfedersteifigkeit auf einen Verbindungsabschnitt geschlossen werden kann.

Die Steuereinrichtung kann mehrteilig oder auch einteilig ausgebildet sein. Ist die Steuereinrichtung mehrteilig ausgebildet, so stehen die Bestandteile der Steuereinrichtung miteinander in Signalverbindung. Die Bestandteile der Steuereinrichtung können auch als Steuermodule bezeichnet werden.

Es hat sich als vorteilhaft herausgestellt, dass die dritte Sensorik in Bezug auf den Gurtförderer ortsfest angeordnet ist. Unter Berücksichtigung der Geschwindigkeit des Fördergurtes kann die Position der einzelnen Fördergurtteilstücke zeitlich nachverfolgt werden.

Es kann eine vierte Sensorik zu Erfassung der Geschwindigkeit des Fördergurtes vorgesehen sein.

Vorteilhafterweise sind in der Steuereinrichtung die Gurtfördereinrichtung charakterisierende Information wie insbesondere die gesamte Fördergurtlänge und/oder die Länge des Obertrums hinterlegt.

In einer bevorzugten Ausführungsform eines Gurtförderers ist als Fördergurt ein Stahlseilfördergurt vorgesehen. Es hat sich als vorteilhaft herausgestellt, als dritte Sensorik eine Spule oder mindestens einen Magnetfeldsensor vorzusehen. Durch die Spule bzw. den Magnetfeldsensor kann eine Anhäufung von Stahl detektiert werden. Eine Anhäufung von Stahl weist auf einen Verbindungsabschnitt hin.

In einer bevorzugten Ausführungsform ist ein Momentensensor in Verbindung mit einem Drehzahlsensor zur Erfassung des tatsächlichen Energieverbrauchs vorgesehen. Der Momentensensor und der Drehzahlsensor sind im Antriebsstrang angeordnet. Anstelle der Drehzahl kann auch ein Geschwindigkeitssignal herangezogen werden. Ist die Drehzahl konstant oder die Geschwindigkeit konstant, so kann auf die Erfassung von Geschwindigkeit oder Drehzahl verzichtet werden.

In einer besonders vorteilhaften Ausführungsform sind der Momentensensor und der Drehzahlsensor in einer in dem Antriebsstrang angeordneten hydrodynamischen Kupplung, insbesondere auf der Abtriebsseite, vorgesehen. Das erfindungsgemäße Verfahren zur Erfassung des Energiebedarfs eines Gurtförderers mit mindestens einem Antrieb und einem Fördergurt bestehend aus Fördergurtteilstücken zeichnet sich durch die folgenden Verfahrensschritte aus:

- Erfassen der Beladungsverteilung des Fördergurtes
- Errechnen des Energiebedarfs des Antriebs unter Berücksichtigung der Beladungsverteilung des Fördergurtes
- Erfassen des Energieverbrauchs des mindestens einen Antriebs
- Anwenden einer Korrelationsfunktion auf den errechneten Energiebedarf zur Herbeiführung einer Übereinstimmung des errechneten Energiebedarfs mit dem gemessenen Energieverbrauch.

Erfindungsgemäss ist vorgesehen, bei der Anwendung der Korrelationsfunktion eine Unterteilung bezogen auf die einzelnen im Obertrum befindlichen Fördergurtteilstücke vorzusehen. Dadurch ist es möglich, im laufenden Betrieb besonders geeignete Fördergurtabschnitte zu identifizieren, wobei diese Fördergurtabschnitte sich durch einen geringen Energieverbrauch auszeichnen. Bei Verwendung von ausschließlich derartigen Fördergurtteilstücken kann der Energieverbrauch des Gurtförderers reduziert werden.

Die Anlagenlänge ist insbesondere bekannt und die Fördergurtlänge der Gurtförderanlage ist bekannt. Somit ist es möglich, durch die Abfolge von Verbindungsabschnitten einzelne Fördergurtteilstücke zu identifizieren. In der Regel unterscheiden sich die Fördergurtteilstücke auch in ihrer Länge, so dass schon allein aufgrund dessen die einzelnen Fördergurtteilstücke eindeutig mittels der dritten Sensorik identifizierbar sind.

Es kann vorgesehen sein, bei einem Start oder bei einem Anlaufen eines Gurtförderers zunächst nur die Fördergurtteilstücke zu identifizieren und bei identifizierten Fördergurtteilstücken die Verfahrensschritte des zuvor beschriebenen Verfahrens durchzuführen.

Weiterhin hat es sich als vorteilhaft herausgestellt, bei der Anwendung der Korrelationsfunktion eine Unterteilung in Anlagenabschnitten vorzusehen. Dadurch können Anlagenabschnitte identifiziert werden, die einen wesentlich höheren Energieverbrauch aufweisen, als den berechneten Energiebedarf des Abschnittes. Für die Identifikation eines höheren Energieverbrauchs ist es erforderlich, dass über eine vorbestimmte Zeit der Energieverbrauch des Anlagenabschnittes über einer vorbestimmten Häufigkeit den Energiebedarf über ein vorbestimmtes Maß überschreitet. Das deutet auf einen wartungsbedürftigen Anlagenabschnitt hin.

In einer bevorzugten Ausführungsform ist vorgesehen, dass über eine vorbestimmte Zeit ein wartungsbedürftiger Anlagenabschnitt erkannt werden muss, bevor eine Meldung eines wartungsbedürftigen Anlagenabschnittes erfolgt. Dadurch kann vermieden werden, dass aufgrund einzelner fehlerhafter Messungen sofort eine Meldung eines wartungsbedürftigen Abschnittes erfolgt.

Es ist vorgesehen eine erste Optimierung mittels der Korrelationsfunktion in Bezug auf die Fördergurtteilstücke und eine weitere Optimierung mittels einer Korrelationsfunktion in Bezug auf die Anlagenabschnitte durchzuführen. In einer bevorzugten Ausführungsform ist vorgesehen, diese beiden Optimierungen parallel durchzuführen.

In einer vorteilhaften Ausführungsform ist ein der Steuereinrichtung zugeordneter Speicher vorgesehen, in dem die zeitlichen Verläufe von wartungsbedürftigen Anlagenabschnitten gespeichert werden. Weiterhin kann in diesem Speicher oder in einem weiteren der Steuereinrichtung zugeordneten Speicher eine den einzelnen Fördergurtteilstücken zugeordnete Güte in Bezug auf den Energieverbrauch in vergleichbarer Form abgelegt werden. Auch eine zeitliche Veränderung des Energieverbrauchs, z.B. durch Alterung, kann somit im laufenden Betrieb ermittelt werden.

In einer bevorzugten Ausführungsform ist vorgesehen, dass zur Bestimmung eines zeitlichen Positionsverlaufs eines Fördergurtteilstückes Verbindungsabschnitte zumindest des Fördergurtteilstückes zu zumindest einem benachbarten Fördergurtteilstück erfasst werden.

In einer bevorzugten Ausführungsform ist vorgesehen, eine Druckfedersteifigkeit des Fördergurtes zu messen. Die Signale werden der Steuereinrichtung zugeleitet. Aus einer zeitweisen Erhöhung der gemessenen Druckfedersteifigkeit wird ein Passieren der Sensorik zur Messung der Druckfedersteifigkeit eines Verbindungsabschnittes zwischen Fördergurtteilstücken erkannt.

Es hat sich als vorteilhaft herausgestellt, bei einem Fördergurt mit Stahlseilen einen Spulenstrom oder ein Magnetfeld zu messen und die Signale der Steuereinrichtung zuzuführen. Aus der zeitlichen Abfolge der Signale werden die Verbindungsabschnitte bestimmt.

In einer bevorzugten Ausführungsform ist für die Bestimmung des Energieverbrauchs vorgesehen, eine Momentenmessung und eine Drehzahlmessung im Antriebsstrang durchzuführen.

Ganz bevorzugt werden Signale eines in einer im Antriebsstrang angeordneten hydrodynamischen Kupplung angeordneten Momentensensors und eines Drehzahlsensors zur Bestimmung des Energieverbrauchs herangezogen.

In einer bevorzugten Ausführungsform ist vorgesehen, einen breitenbezogenen Bewegungswiderstand ($F'_G$) eines Fördergurtteilstückes mittels eines Optimierungsverfahrens zu ermitteln. Insbesondere hat sich der folgende Ansatz

$$F'_G = a \cdot F'^b_O$$

mit $F'_O$ als breitenbezogener Auflast senkrecht zu einer Tragrolle, einem Koeffizient a und einem Exponent b als Parameter, als geeignet herausgestellt. Die Koeffizienten a und b hängen dabei von den Gurteigenschaften des Fördergurtteilstückes ab.

Bestimmbar ist damit vorteilhaft als Walkverlustleistung in der Kontaktzone des Gurtes mit den Tragrollen der breitenbezogene Bewegungswiderstand, wobei der Bewegungswiderstand mit zunehmender Auflast durch Fördergut zunimmt. Der Koeffizient a und der Exponent b sind a priori unbekannt oder vorbelegt, insbesondere z.B. mit Standardwerten belegt und werden mittels des Optimierungsverfahrens angenähert.

In einer bevorzugten Ausführungsform ist die Gurtförderanlage mit einem Temperatursensor versehen. Die zur gleichen Zeit erfassten Messwerte werden einer Temperaturklasse zugeordnet. Es ist eine Mehrzahl an Temperaturklassen vorgesehen. Eine Bestimmung oder Auswertung wird nur innerhalb einer Temperaturklasse durchgeführt. Dadurch werden Schwankungen aufgrund von unterschiedlichen Temperaturen eliminiert.

Durch die zuvor beschriebene Vorrichtung und das Verfahren können während des Betriebs durch die zuvor beschriebenen Maßnahmen spezifische Einflüsse auf den Energieverbrauch von Gurtförderern und deren einzelne Bestandteile ermittelt werden. Dadurch ist es möglich, Korrekturen oder Verbesserungen für einzelne Anlagenabschnitte gezielt durchführen.

Bei einem Anlagenabschnitt handelt es sich um einen Abschnitt des Gurtförderers in Transportrichtung, wobei der Anlagenabschnitt der den Gurt tragenden Komponenten des Gurtförderers umfasst. Die Länge der Anlagenabschnitte ist frei wählbar. Bevorzugt werden Anlagenabschnitte in Abhängigkeit vom Verlauf, insbesondere Steigung und Aufrichtungsrichtung, eingeteilt.

Ein Anlagenabschnitt kann verschiedene Fördergurtteilstücke zumindest teilweise umfassen.

Der Energieverbrauch ist die Gesamtleistung zum Antreiben des umlaufenden Gurts mittels eines oder ggfs. auch mehrerer Antriebe bzw. Motoren.

Das als Korrelationsfunktion bezeichnete Optimierungsverfahren ist z.B. eine Minimierung der Summe aller Fehlerquadrate der n Messwerte mittels Gradientenverfahren. Das Gradientenverfahren ist z.B. aus Andreas Meister: Numerik linearer Gleichungssysteme. 2. Auflage. Vieweg, Wiesbaden 2005, ISBN 3-528-13135-7 bekannt. Das Optimierungsverfahren wird zur Annäherung des berechneten Energiebedarfs an den gemessenen Energieverbrauch durchgeführt.

Das Ermitteln des Referenz-Gütefaktors aus den so angenäherten Variablen erfolgt für einen festgelegten Referenz-Massenstrom oder eine Nennförderleistung, insbesondere gemäß DIN 22101. Insbesondere wird der Referenz-Gütefaktor- bzw. sogenannte f-Wert ermittelt, mit dem die DIN-Formel für das pauschale Berechnungsverfahren für die Nennförderleistung denselben Leistungsbedarf liefert wie das Verfahren zur Berechnung der Einzelkomponenten des Leistungsbedarfs mit den optimierten Variablen. Mit Leistungsbedarf ist ein theoretisch ermittelter Energieverbrauch bezeichnet.

Das Bereitstellen der ermittelten zugeordneten Energieverbrauche bzw. der Referenz-Gütefaktor-(f)-Werte erfolgt dabei z.B. durch eine Darstellung, insbesondere durch eine Darstellung, die von Bedienungs- oder Auswertepersonal betrachtbar oder in z.B. digitaler Form weiter verarbeitbar oder abspeicherbar ist.

Die erfindungsgemäße Lösung wird nachfolgend anhand einer Figur erläutert. Darin ist im Einzelnen folgendes dargestellt:

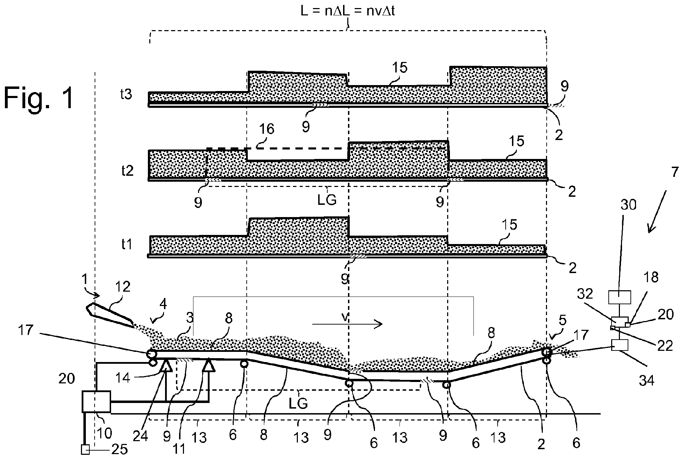

Fig. 1: zeigt in schematisiert vereinfachter Darstellung den Grundaufbau eines Gurtförderers und einer sich zeitlich verändernden Beladungsverteilung.

Ein Gurtförderer 1, auch bezeichnet als Gurtförderanlage, weist einen umlaufenden Fördergurt 2 auf, der allgemein auch als Band bezeichnet wird. Auf dem Gurt 2 wird ein Fördergut 3, insbesondere Schüttgut, von einem Aufgabebereich 4 zu einem Abgabe- bzw. Übergabebereich 5 transportiert. Der Fördergurt 2 wird durch Umlenkrollen 17, häufig auch als Umlenktrommeln oder Trommeln bezeichnet, vor dem Aufgabebereich 4 und im Bereich des Abgabenbereichs 5 umgelenkt. Der Fördergurt 2 ist mittels Tragrolle 6 im Ober- und Untertrum geführt und wird durch Trommeln 17 umgelenkt, wobei eine oder mehrere Trommeln 17 einen Antrieb 7, z.B. Elektromotor, aufweisen, um den Fördergurt in Bewegung zu versetzen. Zum Transport des Schüttguts wird meistens der obere Abschnitt der Gurtförderanlage genutzt. Dieser wird als Obertrum bezeichnet. Der nicht beladene untere Teil, in dem der Fördergurt zurückgeführt wird, wird als Untertrum bezeichnet. Die im Obertrum und im Untertrum angeordneten Tragrollen können unterschiedlich ausgeführt sein.

Der Gurt 2 besteht aus einer Vielzahl von Fördergurtteilstücken 8. Die Fördergurtteilstücke 8 sind über Verbindungsabschnitte 9 miteinander verbunden und bilden zusammen den umlaufenden Fördergurt 2. Skizziert ist der Fördergurt 2 in Fig. 1 beispielhaft bestehend aus drei Fördergurtteilstücken 8. Einer von diesen Fördergurtteilstücken hat beispielhaft eine Fördergurtteilstückslänge LG. Jeder der Fördergurtteilstücke kann eine eigene, zu den anderen Fördergurtteilstücken 8 unterschiedliche Einzelgurtlänge haben.

Eine Steuereinrichtung 10 dient zum Betreiben eines Teils der oder aller Funktionen des Gurtförderers 1. Die Steuereinrichtung 10 kann auch mehrteilig ausgeführt sein.

Beispielsweise kann die Steuereinrichtung 10 über den Antrieb 7 die Bewegung, insbesondere Geschwindigkeit v des Fördergurts 2 steuern. Es kann auch vorgesehen sein, dass der Fördergurt 2 durch eine Mehrzahl von Antrieben 7 angetrieben wird. Die den Energieverbrauch der Antriebe 7 charakterisierende Signale werden der Steuereinrichtung 10 zugeführt. Die den Energieverbrauch charakterisierende Signale werden durch eine erste Sensorik 18 erfasst.

Der Antrieb 7 kann einen Motor, der über eine hydrodynamische Kupplung 32 mit einem Getriebe 34 verbunden ist, aufweisen. Die Abtriebswelle des Getriebes 34 ist mit einer antreibbaren Umlenkrolle 17 verbunden. Es kann vorgesehen sein, der Steuereinrichtung 10, die von der hydrodynamischen Kupplung 32 abgegebenen das Moment charakterisierenden Signale und ebenso auch die Drehzahl charakterisierenden Signale für eine Ermittlung des Energieverbrauchs zuzuleiten. Durch einen in der hydrodynamischen Kupplung 32 angeordneten Drehzahlsensor 22 und einen in der hydrodynamischen Kupplung 32 angeordneten Momentensensor 20 werden die charakterisierenden Signale gewonnen. Von diesen Sensoren 20, 22 werden die Signale der Steuereinrichtung 10 zugeleitet.

Weiterhin ist vorgesehen, dass der Steuereinrichtung 10 Signale einer dritten Sensorik 11 zugeführt werden. Durch die Signale der dritten Sensorik 11 ist es möglich Verbindungsabschnitte 9 zweier Fördergurtteilstücke, auch als Einzelgurte bezeichnet, zu erfassen. Die dritte Sensorik 11 ist ortsfest in der Gurtförderanlage 1 angeordnet. Wird ein Verbindungsabschnitt 9 detektiert, so ist auch gleichzeitig die Position des Verbindungsabschnittes 9 bekannt. Dabei kann die momentane Geschwindigkeit des Fördergurtes 2 und die Rechenzeit für das Erkennen eines Verbindungsabschnittes 9 mit berücksichtigt werden.

Bei Verwendung von Stahlseilfördergurten kann als dritte Sensorik 11 eine Spule oder ein Magnetfeldsensor zur Detektion von Verbindungsabschnitte 9 vorgesehen sein. Im laufenden Betrieb kann durch die Periodizität der detektierten Verbindungsabschnitte 9 die Länge und die Abfolge von Fördergurtteilstücken 9 ermittelt werden. In der Regel ist zusätzlich auch noch die Gesamtlänge des Fördergurtes 2 bekannt.

Bei Verwendung von Gewebefördergurten oder Stahlseilfördergurten kann als dritte Sensorik 11 eine Sensorik zur Erfassung der Druckfedersteifigkeit des Fördergurtes 2 vorgesehen sein.

Beispielhaft ist eine Schütte 12 skizziert. Über die Schütte wird das Fördergut 3 auf den Gurt 2 aufgebracht. Beispielsweise im Bereich unterhalb der Schütte 12 ist eine Bandwaage 14 als eine Ausführungsform einer zweiten Sensorik 24 angeordnet. Die Bandwaage 14 erfasst eine Auflast, d.h. ein Gewicht des auf den Gurt 2 aufgebrachten Förderguts 3 und gibt einen entsprechenden Gewichtswert als Messwert an die Steuereinrichtung 10 weiter.

Beispielhaft ist der Gurtförderer 1 über eine Beladelänge L des umlaufenden Gurts 2 in n, beispielhaft n = vier Anlagenabschnitte 13 bzw. momentane Bandabschnitte der Gurtförderanlage unterteilt. Für diese Anlagenabschnitte 13 und/oder die Fördergurtteilstücke 8 ist die Steuereinrichtung 10 ausgelegt. Mittels der verfügbaren Werte, insbesondere der Auflast und dem Leistungsverbrauch wird das bevorzugte Verfahren zum Bestimmen eines Energieverbrauchs, des Energiebedarfs durchgeführt.

Insbesondere wird dabei ein Referenz-Gütefaktor f bestimmt, der einem Abschnitts-Widerstand als Gesamt-Widerstand im Gurtförderer als Gütefaktor entsprechen kann.

Oberhalb ist in der Figur für drei während des Förderns aufeinanderfolgende, zueinander verschiedene Zeitpunkte t1, t2, t3 eine mittlere Auflast auf den Anlagenabschnitten 13 skizziert, die mittels der Steuereinrichtung 10 für diese bestimmt wurde. Verwendet wird für die Berechnung eine Beladelänge ΔL, auf die während eines Zeitintervalls Δt von der Bandwaage 14 die aufgebrachte Fördermenge erfasst wird.

Ein Verfahrensschritt betrifft eine Erfassung der einzelnen Fördergurtteilstücke 8. Dies kann beispielsweise aufbauend auf dem Verfahren gemäß der WO 2008/083809 A1 durchgeführt werden. Jedoch wird zusätzlich zur Berücksichtigung der Beladungsverteilung die Abfolge der eingesetzten Fördergurtteilstücke 8 erfasst.

Bei dem hier beschriebenen Verfahren wird neben der Berücksichtigung der Beladungsverteilung die Abfolge der eingesetzten Fördergurtteilstücke erfasst. Dies kann z.B. dadurch erfolgen, dass im Antriebsstrang an einer oder mehrerer Antriebstrommeln 7 das Moment mit hinreichend hoher Abtastrate und Genauigkeit gemessen wird:

Das Moment entspricht der Umfangskraft (= auflaufende Kraft minus ablaufende Kraft) multipliziert mit dem wirksamen Radius. Der wirksame Radius ist der Abstand zwischen Drehachse der Trommel und neutraler Faser im Gurt. Im Bereich der Verbindungsabschnitte 9 weicht die Lage der neutralen Faser von der im ungestörten Fördergurtteilstück 8 außerhalb der Verbindung geringfügig ab - selbst wenn die Gurtdicke konstant ist. Dies liegt zum einen daran, dass in einer Verbindung mehr Zugträger (Stahlseile oder Gewebe) konzentriert sind und sich dadurch die Druckfedersteifigkeit des Gurtes im Bereich der Verbindung ändert. Zum anderen werden die Verbindungen manuell hergestellt und ihre Eigenschaften unterliegen somit dem handwerklichen Geschick der Vulkaniseure und damit einer größeren Toleranz als der Rest des industriell hergestellten Gurtes. Der wirksame Radius ändert sich beim Durchlauf eines Verbindungsabschnittes also geringfügig. Bei einer Antriebstrommel von 1.000 mm Durchmesser (= 500 mm Radius) führt eine Lageänderung der neutralen Faser von 0,5 mm zu einer Momentenschwankung von 0,1 %. Diese Momentenschwankung baut sich auf und verschwindet wieder innerhalb der Durchlaufzeit eines Verbindungsabschnittes 9.

Diese Durchlaufzeit tVerb berechnet sich wie folgt:

$$tVerb = (lU,Trommel + lVerb)/vGurt,$$

mit

$$IU,Trommel \approx r.\alpha$$

IVerb: Verbindungslänge

vGurt: Gurtgeschwindigkeit

IU,Trommel: Umschlingungsbogen der Trommel

r: Trommelradius

$\alpha$: Umschlingungswinkel in rad

Rechenbeispiel: Gurtnennfestigkeit St 2500, zweistufiger Verbindungsabschnitt mit IVerb $\approx$ 1 m, Trommeldurchmesser 1.000 mm, Umschlingungswinkel 180°, Gurtgeschwindigkeit 4 m/s:

$$tVerb = (\pi \cdot 0{,}5 + 1)/4 = 0{,}64 \text{ s}$$

Jeder Verbindungsabschnitt 9 wird ein leicht unterschiedliches Momentensignal erzeugen, doch alle diese Momentensignale sind ähnlich lang. Ihr zeitlicher Abstand entspricht der Länge der einzelnen Fördergurtteilstücke 8, die in der Regel bekannt ist oder auch aus den erkannten Momentensignalen, die sich ja nach jedem Umlauf wiederholen, errechnet werden kann. Da der endlos geschlossene Gurt einer Gurtförderanlage aus einzelnen Gurtstücken besteht, die in aller Regel nicht alle gleich lang sind, kann aus der zeitlichen Abfolge der detektierten Verbindungsabschnitte 9 zu jedem Zeitpunkt die genaue Position jedes einzelnen Fördergurtteilstückes 8 bestimmt werden.

Die Erkennung von Verbindungsabschnitten 9 bei Stahlseilgurten kann alternativ auch dadurch erfolgen, dass eine Spule oder ein Magnetfeldsensor ortsfest dicht unter einer Laufplatte des Gurtes 2 montiert wird. Bei Stahlseilfördergurten ergibt sich aus der Art der Verbindung eine Anhäufung von Stahl in der Verbindung, was durch einen Sensor gut erkennbar ist.

Die Verwendung eines Momentensensors im Antriebsstrang hat den zusätzlichen Vorteil, dass der tatsächliche Energieverbrauch des Gurtförderers 1 sehr viel genauer erfasst werden kann, als mit einem elektrischen Wirkleistungsmesser in der Stromversorgung des Motors 30. Diese erhöhte Genauigkeit kommt der Güte des hier beschriebenen Verfahrens zugute.

Ein weiterer Verfahrensschritt betrifft eine Synchronisierung von Belade- und Anlagenprofil.

Das Profil des Gurtförderers 1, das ggfs. Längs- und Höhenkoordinaten entlang des Gurtförderers 1 berücksichtigt, wird beispielsweise mit dem Signal der Bandwaage 14 oder den Signalen der zweiten Sensorik 24 synchronisiert. Dazu wird zu jedem Zeitintervall $\Delta t$ eine zu diesem Zeitintervall $\Delta t$ gehörende Fördermenge mi von der Bandwaage 14 erfasst und - entsprechend einer Laufzeit zwischen Bandwaage 14 und Aufgabepunkt - mit passendem Zeitverzug einem Bandabschnitt bzw. Anlagenabschnitt 13 des Gurtförderers 1 der Länge $\Delta L = \Delta t \cdot v$ zugeordnet, wobei v der Geschwindigkeit des Gurts 2 entspricht. Läuft der Gurt ohne Schlupf über die Antriebstrommel 7, so ist auch der Drehgeschwindigkeit der Antriebstrommel 7 die Geschwindigkeit des Gurtes bekannt. Gleichzeitig wird diese Beladung einem Teilstück, auch als Beladelänge $\Delta L$ bezeichnet, des Gurtes 2 zugeordnet, der gerade den Aufgabebereich 4 passiert. Dieses Beladelänge $\Delta L$ kann jeweils gleichlang sein oder unterschiedliche Länge aufweisen. Bei der Verwendung von unterschiedlichen Längen können die Beladelängen an die Gesamtlänge LG des Fördergurtteilstückes 8 angepasst sein, vorzugsweise ist ein Fördergurtteilstück 8 in gleichlange Beladelängen unterteilt. Die Beladeverteilung entlang des Gurtförderers 1, wie auch die Position der Beladelänge der Fördergurtteilstücke 8 aus dem vorhergehenden Zeitintervall $\Delta t$ werden entsprechend um die Beladelänge $\Delta L$ weitergeschoben, wobei das bislang vorderste Beladungspaket wegfällt.

So sind den einzelnen Anlagenabschnitten 13 jeweils eine momentane Beladungsverteilung 15 und entsprechend den Fördergurtteilstücken 8 jeweils eine momentane Beladungsverteilung 16 zuordbar. Für die Beladungsverteilung 16 der Fördergurtteilstücke 8 wird zusätzlich das Signal des Verbindungsabschnitt-Sensors 11 verwendet. Als Beladungsverteilungen 15, 16 werden insbesondere rechnerisch ermittelte Mittelwerte der Auflast durch das darauf befindliche Fördergut 3 bestimmt.

Ein weiterer Verfahrensschritt betrifft eine Berechnung der Einzelkomponenten des Leistungsbedarfs.

Dabei wird für jedes Zeitintervall für jedes j der n Teilstücke der aktuelle Leistungsbedarf errechnet. Es werden dabei die folgenden Einzelkomponenten einer Hubleistung, einer Walkverlustleistung in der Kontaktzone des Gurtes 2 mit den Tragrollen 6, einer Walkverlustleistung im Fördergut 3 und optional einer Verlustleistung aus einem Tragrollenlaufwiderstand, einer Beschleunigungsleistung, dies insbesondere nur für ein Teilstück mit Übergabe, und einer Schurrenreibleistung, dies insbesondere nur für Teilstücke mit einer Längsschurre berücksichtigt.

Die Hubleistung ergibt sich aus der physikalischen Arbeit pro Zeiteinheit, um das geförderte Material auf ein höheres Niveau anzuheben, also einem Leistungsbedarf, oder auf ein niedrigeres Niveau abzusenken, also einer Leistungsrückspeisung. Sie ist unabhängig vom Zustand der Anlage, den verwendeten Gurten etc.

Die Walkverlustleistung in der Kontaktzone des Gurtes mit den Tragrollen ist erforderlich zum horizontalen Transport des Materials und hängt ab vom Ausrichtzustand der Anlage und den Dämpfungseigenschaften des verwendeten Gurtes 2. Aus der Dichte des Förderguts 3 und der aktuellen Beladung lässt sich die Auflastverteilung auf den Tragrollen 6 berechnen. Ein breitenbezogener Bewegungswiderstand $F'_G$ eines Gurtes 2 im Kontakt mit einer Tragrolle 6 lässt sich insbesondere sehr gut durch die mathematische Funktion $F'_G = a \cdot F'_O{}^b$ nachbilden, wobei $F'_O$ eine breitenbezogene Auflast senkrecht zur Tragrolle 6 ist. Der Koeffizient a und der Exponent b sind Parameter, die von den Gurteigenschaften und möglichen Ausrichtfehlern abhängen und die a priori nicht bekannt sind bzw. nicht bekannt sein müssen und durch ein geeignetes Optimierungsverfahren angenähert werden. Zur Berechnung dieser Verlustleistung kann z.B. der Gurt 2 in m Streifen aufgeteilt werden, wobei für jeden Streifen der Bewegungswiderstand berechnet, insbesondere mittels $F'_G$ mal Streifenbreite, und mit der Gurtgeschwindigkeit v multipliziert wird. Die Ergebnisse aller Streifen werden aufsummiert und auf die Gesamtlänge des betrachteten Bandabschnitts, z.B. der Beladelänge $\Delta L$ hochgerechnet. Eine vereinfachte Version einer solchen Verfahrensweise ist in Wennekamp, T.: "Tribologische und rheologische Eigenschaften von Fördergurten", Dissertation Universität Hannover 2008 beschrieben.

Die Walkverlustleistung im Fördergut 3 entsteht durch Reibungsverluste innerhalb des Förderguts 3, die umgekehrt proportional zum Quadrat einer örtlichen Gurtspannung und unabhängig vom verwendeten Gurt 2 bzw. Fördergurtteilstück 8 sind. Die Gurtspannung entlang des Gurtförderers 1 kann aus einer aktuellen Beladungsverteilung und Antriebsleistung sehr genau berechnet werden, wenn sie an einer Stelle als Messergebnis vorliegt.

Die Verlustleistung aus Tragrollenlaufwiderstand hängt ab vom Laufwiderstand einer Tragrolle 6 und ist bauartbedingt und für den Bereich der in der Praxis vorkommenden Beladung nahezu unabhängig von der Auflast. Der Tragrollenlaufwiderstand kann vom Hersteller erfragt werden oder alternativ als Teil der Leerlaufleistung berechnet werden, indem man von dieser die Walkverlustleistung des leeren Gurtes abzieht.

Die Beschleunigungsleistung ergibt sich als Produkt aus Massenstrom im Bereich der Übergabe- bzw. Aufgabebereich 4 mal dem Quadrat der Differenzgeschwindigkeit zwischen Fördergut 3 und Gurt 2 und entspricht z.B. bei senkrechter Aufgabe $v^2$. Gerade bei Gurtförderern 1 mit höherer Geschwindigkeit führt die korrekte Berücksichtigung der aktuellen Beschleunigungsleistung zu einem erheblichen Genauigkeitsgewinn bei der Ermittlung der aktuellen Energieeffizienz des Gurtförderers 1.

Die Schurrenreibleistung ist relevant im Bereich der Fördergutaufgabe und entlang einer Ausmuldungsstrecke, wo vor der Abwurftrommel Längsschurren eingesetzt werden, um seitliches Abladen des Förderguts 3 zu verhindern. Diese Schurren sind meist so konstruiert, dass sie keinen Kontakt zum Gurt 2 haben. Kontakt zum Fördergut 3 haben sie erst ab einer bestimmten Höhe des Förderstroms. Unterhalb dieser Grenzbeladung ist die durch Schurren erzeugte Reibleistung also Null, darüber steigt sie in guter Näherung proportional zum Förderstrom an. Ihr Anteil am gesamten Leistungsbedarf ist gering, die korrekte Berücksichtigung aber ebenfalls vorteilhaft für eine genaue Ermittlung der Energieeffizienz.

Die Summe aller Leistungsanteile aller Teilstücke n ergibt einen Gesamtleistungsbedarf, der über einen hinreichend langen Zeitraum mit der aktuellen Wirkleistung bzw. dem Energieverbrauch des Antriebs 7 verglichen wird. Bevorzugt berücksichtigte Variablen in der Berechnung der theoretischen Leistungsbedarfs - die globalen Gurtparameter a, b für die im Obertrum mit den Tragrollen 6 in Kontakt stehende Laufseite bzw. a', b' für die im Untertrum mit den Tragrollen 6 im Kontakt stehende Tragseite, der Tragrollenlaufwiderstand und die Grenzbeladungen, ab denen an Front und Heck Schurrenreibung auftritt, sowie die Reibwerte zur Berücksichtigung dieser Schurrenreibung - werden durch ein Optimierungsverfahren variiert, bis eine Abweichung zwischen errechnete Leistungsbedarf und gemessener Wirkleistung bzw. Energeiverbrauch im betrachteten Zeitraum minimal wird.

Ein weiterer Verfahrensschritt betrifft eine Berücksichtigung eines Temperatureinflusses auf den Gurt 2 und ggfs. auch weitere bewegliche und reibende Komponenten während des Betriebs.

Da die Gurttemperatur des Gurts 2 einen erheblichen Einfluss auf die Gurteigenschaften hat, wird diese bevorzugt ebenfalls berücksichtigt. Die Gurttemperatur ergibt sich aus einer Umgebungstemperatur und einer in den Gurt 2 durch die Gummiwalkung eingetragenen Wärme. Nach einem längeren Stillstand hat der Gurt 2 die Umgebungstemperatur angenommen und wird nach einem Wiederanlaufen langsam wärmer, wodurch der Bewegungswiderstand infolge Gummiwalkung abnimmt, bis ein Beharrungszustand erreicht ist. Entsprechend werden bevorzugt nur solche Messwerte berücksichtigt, bei denen die Umgebungstemperatur hinreichend lange konstant war und Änderungen des errechneten spezifischen Bewegungswiderstands unter eine entsprechende Schranke gesunken sind. Die Messwerte werden in einer für sie geltenden Temperaturklasse der entsprechenden Umgebungstemperatur bereitgestellt, insbesondere abgespeichert. Eine Auswertung erfolgt dann je Temperaturklasse. Der Temperatureinfluss wirkt üblicherweise für alle Fördergurtteilstücke 8 gleichermaßen. Eine Bewertung der verschiedenen Fördergurtteilstücke 8 hinsichtlich Energieverbrauch kann für verschiedene Temperaturklassen erfolgen. Die absoluten Werte des spezifischen Bewegungswiderstands der Fördergurtteilstücke 8 zwischen einer tiefen und einer hohen Temperaturklasse können sich erheblich unterscheiden.

Ein weiterer Verfahrensschritt betrifft eine Berücksichtigung der spezifischen Schüttdichte.

Zur möglichst genauen Berechnung der Walkverlustleistung in der Kontaktzone des Gurtes 2 mit den Tragrollen 6 wird das spezifische Schüttgewicht des Förderguts 3 verwendet. Wenn sich dies aufgrund von Einsatzbedingungen des Gurtförderers 1 ändern kann, so wird neben der Erfassung des Massenstroms mittels Bandwaage 14 auch der Volumenstrom, z.B. mittels Laser-Lichtschnittverfahren gemessen und berücksichtigt.

Ein weiterer Verfahrensschritt betrifft einen eigentlichen Ablauf der Berechnung.

Zu einer Abfolge von n Messwerten der aktuellen Antriebsleistung und der aktuellen Beladung, insbesondere Gesamtmasse mit einer durchschnittlichen Schüttdichte für eine Beladelänge ∆L, werden folgende Berechnungsschritte durchgeführt:

a. Berechnung der insbesondere vorstehend beschriebenen Einzelkomponenten des Leistungsbedarfs unter Zugrundelegung vorab geschätzter oder vorab festgelegter Werte für die Variablen in der Berechnung der theoretischen Antriebsleistung, d.h. insbesondere der globalen Gurtparameter a, b etc., und Vergleich mit den zugehörigen n Messwerten der ermittelten Antriebsleistung.

b. Variation der Variablen mittels geeignetem Optimierungsverfahren, z.B. Minimierung der Summe aller Fehlerquadrate der n Messwerte mittels Gradientenverfahren zur Annäherung an den gemessenen Leistungsbedarf auf diesem Intervall der n Messwerte.

c. Mit den so gefundenen Variablen wird für einen festgelegten Referenz-Massenstrom, bzw. Nennförderleistung ein Referenz-Gütefaktor f insbesondere gemäß DIN 22101 ermittelt. Insbesondere wird der sogenannte f-Wert ermittelt, mit dem die DIN-Formel für das pauschale Berechnungsverfahren für die Nennförderleistung denselben Leistungsbedarf liefert, wie das vorstehend beschriebene Verfahren mit den optimierten Variablen.

d. Es folgt optional eine Entscheidung über eine Gültigkeit der Messwerte: Wenn sich über hinreichend viele Messwerte die Umgebungstemperatur nicht geändert hat, so wird über diese Messwerte ein gleitender Mittelwert des Referenz-Gütefaktors gebildet. Ist dessen Gradient kleiner als eine vorgegebene Schranke, so sind die Messwerte gültig.

e. Für jeden gültigen Messwert werden die Fördergurtteilstücke 8 gemäß ihrer Beladung 16 sortiert, ebenso die Anlagenabschnitte 13 des Gurtförderers 1 gemäß ihrer Beladung des Anlagenabschnittes 15.

f. Abspeichern dieser beiden Sortierreihenfolgen mit zugehörigem f-Wert und optional auch der aktuellen Temperaturklasse.

Ein weiterer Verfahrensschritt betrifft eine eigentliche Auswertung. Dabei sind nachfolgende Schritte auch ohne Berücksichtigung von Temperaturklassen durchführbar, wenn z.B. im laufenden Betrieb keine kritischen Temperaturschwankungen auftreten.
Für jede gültige Temperaturklasse, d.h. es werden für jede Temperaturklasse nur Messwerte berücksichtigt, bei denen die Bandanlage bereits länger als die zur Erreichung der Beharrungstemperatur im Gurt 2 erforderliche Zeit in dieser Temperaturklasse betrieben wurde, werden für jedes Fördergurtteilstück 8 alle f-Werte dargestellt, wenn dieser Einzelgurt 8 jeweils die oberste und die unterste Stelle in der Sortierreihe einnahm. Die Überlegung dahinter ist Folgende: Wenn ein Gurt einen niedrigen Bewegungswiderstand hat, so sollten die f-Werte von den Beladungssituationen, in denen er einen hohen Anteil hatte (=oberste Stelle in der Sortierreihenfolge), niedriger sein als diejenigen, wenn er nur wenig beladen war (=unterste Stelle der Sortierreihenfolge).
Weiterhin werden für jedes Fördergurtteilstück 8 die Mittelwerte der f-Werte für jeweils die oberste und die unterste Stelle des Einzelgurtes 8 in der Sortierreihe für diese Temperaturklasse ermittelt.
Für jede Temperaturklasse werden die Einzelgurte 8 nach diesen Mittelwerten sortiert.
Da ein energetisch guter Gurt 2 oder Fördergurtteilstück 8 umso größeren Nutzen für den gesamten Bewegungswiderstand hat, je größeren Anteil er an der Beladung hat und umgekehrt, wird aus dem Vergleich der beiden Sortierreihenfolgen und der Differenz der jeweiligen f-Werte für größte und kleinste Beladung jedes Fördergurtteilstückes 8 auf die Güte bzw. momentane Genauigkeit des Verfahrens und auf die Größe des Unterschieds zwischen den eingesetzten Fördergurtteilstücken 8 geschlossen.
In gleicher Weise werden für jeden Anlagenabschnitt alle f-Werte dargestellt, wenn dieser Abschnitt die oberste und die unterste Stelle in der Sortierreihe einnahm.
Weiterhin werden für jeden Abschnitt die Mittelwerte der f-Werte für jeweils die oberste und die unterste Stelle des Abschnittes in der Sortierreihe für diese Temperaturklasse ermittelt.
Für jede Temperaturklasse werden die Anlagenabschnitte nach diesen Mittelwerten sortiert.
Da ein gut gewarteter und ausgerichteter Anlagenabschnitt 13 umso größeren Nutzen für den gesamten Bewegungswiderstand hat, je größeren Anteil er an der Beladung hat und umgekehrt, wird aus dem Vergleich der beiden Sortierreihenfolgen und der Differenz der jeweiligen f-Werte für größte und kleinste Beladung jedes Anlagenabschnitts auf die Güte bzw. momentane Genauigkeit des Verfahrens und auf die Größe des Unterschieds zwischen den einzelnen Abschnitten geschlossen.
Eine vorteilhafte alternative Ausgestaltung der Auswertung besteht darin, jedem Fördergurtteilstück und jedem Anlagenabschnitt den zu jedem Beladungszustand gehörigen Referenz-Gütefaktor f mit einem Gewichtungsfaktor gemäß seiner aktuellen Beladung gutzuschreiben und diese gewichteten f-Werte für jede Temperaturklasse aufzusummieren und ggf. durch die Anzahl der Meßwerte zu dividieren. Die so ermittelten Summen oder Werte jedes Fördergurtteilstücks und jedes Anlagenabschnitts geben deren Effizienz im Vergleich aller Fördergurtteilstücke und Anlagenabschnitte sehr gut wieder.

**Bezugszeichenliste:**

| | |
|---|---|
| 1 | Gurtförderer bzw. Gurtförderanlage |
| 2 | Fördergurt, auch als Band bezeichnet |
| 3 | Fördergut, Beladung |
| 4 | Aufgabebereich |
| 5 | Abgabe- bzw. Übergabebereich |
| 6 | Tragrolle |
| 7 | Antrieb |
| 8 | Fördergurtteilstück |
| 9 | Verbindungsabschnitt zweier Fördergurtteilstücke |
| 10 | Steuereinrichtung |
| 11 | dritte Sensorik, Verbindungsabschnitt-Sensor, |
| 12 | Schütte |
| 13 | Anlagenabschnitt bzw. momentaner Bandabschnitt der Gurtförderanlage |
| 14 | Bandwaage |
| 15 | Beladungsverteilung über Anlagenabschnitten |
| 16 | Beladungsverteilung über Einzelgurt |
| 17 | Umlenkrolle |
| 18 | erste Sensorik (Energieverbrauch) |
| 20 | Momentensensor |
| 22 | Drehzahlsensor |
| 24 | zweite Sensorik (Beladungssensor) |
| 25 | Temperatursensor |
| 30 | Motor |
| 32 | hydrodynamische Kupplung |
| 34 | Getriebe |

| | |
|---|---|
| f | Referenz-Gütefaktor im Gurtförderer |
| n | Anzahl der Anlagenabschnitte, Anzahl der Messwerte |
| LG | Einzelgurtlänge |
| L | Beladelänge des umlaufenden Gurts |
| $\Delta L$ | Beladelänge eines Zeitintervalls $\Delta t$ |
| $\Delta t$ | Zeitintervall einer von einer Bandwaage erfassten Fördermenge |
| t1 - t3 | zueinander verschiedene Zeitpunkte während des Förderns |
| v | Geschwindigkeit des Gurts |

**Patentansprüche**

1. Gurtförderer (1) mit mindestens einer Steuereinrichtung (10) und mit mindestens einem Antrieb (7) zum Antreiben eines Fördergurtes (2) bestehend aus Fördergurtteilstücken (8) und mit mindestens einer Tragrolle (6), wobei der Fördergurt (2) Verbindungsabschnitte (9) zwischen den Fördergurtteilstücken (8) aufweist und mit einer ersten Sensorik (18) zur Erfassung des Energieverbrauchs des Antriebs (7) und mit einer zweiten Sensorik (24, 14) zur Erfassung einer einem Abschnitt des Fördergurtes (2) zuordenbaren Beladung (3), **dadurch gekennzeichnet,**

dass eine dritte Sensorik (11) zur Detektion von Verbindungsabschnitten (9) zwischen den Fördergurtteilstücken (8) vorgesehen ist und wobei eine Korrelationsfunktion auf einen errechneten Energiebedarf zur Herbeiführung einer Übereinstimmung des errechneten Energiebedarfs mit einem gemessenen Energiebedarfs anwendbar ist zur Identifikation von Fördergurtabschnitten, die sich durch einen geringen Energieverbrauch auszeichnen, und/oder zur Identifikation von Anlagenabschnitten, die einen höheren Energiebedarf aufweisen.

2. Gurtförderer (1) nach Anspruch 1, **dadurch gekennzeichnet,** dass die dritte Sensorik (11) mindestens einen Sensor zur Erfassung der Druckfedersteifigkeit des Fördergurtes (2) umfasst.

3. Gurtförderer (1) nach Anspruch 1, **dadurch gekennzeichnet,** dass als Fördergurt (2) ein Stahlseilfördergurt vorgesehen ist und als dritte Sensorik (11) eine Spule oder mindestens einen Magnetfeldsensor zur Detektion von Verbindungsabschnitten (9) durch Detektion einer Anhäufung von Stahl in den Verbindungsabschnitten (9) vorgesehen ist.

4. Gurtförderer (1) nach einem der vorhergehenden Ansprüche, **dadurch gekennzeichnet,** dass die dritte Sensorik (11) ortsfest angeordnet ist und der Fördergurt (2) durch den Antrieb (7) gegenüber der dritten Sensorik (11) antreibbar angeordnet ist.

5. Gurtförderer (1) nach einem der vorhergehenden Ansprüche, **dadurch gekennzeichnet,** dass die erste Sensorik (18) zur Erfassung des tatsächlichen Energieverbrauchs des Antriebs (7) einen Momentensensor (20), der im Antriebsstrang angeordnet ist, umfasst.

6. Gurtförderer (1) nach einem der vorhergehenden Ansprüche, **dadurch gekennzeichnet,** dass der Momentensensor (20) in einer in dem Antriebsstrang angeordneten hydrodynamischen Kupplung vorgesehen ist.

7. Verfahren zur Erfassung des Energiebedarfs eines Gurtförderers (1) mit mindestens einem Antrieb und einem Fördergurt (2) bestehend aus Fördergurtteilstücken (8) mit den folgenden Verfahrensschritten:

    - Erfassen der Beladungsverteilung des Fördergurtes (2)
    - Errechnen des Energiebedarfs des Antriebs (7) unter Berücksichtigung der Beladungsverteilung des Fördergurtes (2)
- Erfassen des Energieverbrauchs des Antriebs (7)
**dadurch gekennzeichnet, dass** der folgende Verfahrensschritt vorgesehen ist:
- Anwenden einer Korrelationsfunktion auf den errechneten Energiebedarf zur Herbeiführung einer Übereinstimmung des errechneten Energiebedarfs mit dem gemessenen Energieverbrauchs in Bezug auf die Fördergurtteilstücke oder in Bezug auf die Anlagenabschnitte.

8. Verfahren nach Anspruch 7,
**dadurch gekennzeichnet,**
**dass** zur Bestimmung eines zeitlichen Positionsverlaufs eines Fördergurtteilstückes (8) Verbindungsabschnitte (9) zumindest des Fördergurtteilstückes (8) zu zumindest einem benachbarten Fördergurtteilstück (8) erfasst werden.

9. Verfahren nach einem der vorhergehenden Ansprüche,
**dadurch gekennzeichnet,**
**dass** eine Messung einer Druckfedersteifigkeit des Fördergurtes (2) erfolgt und die Signale der Steuereinrichtung (10) zugeleitet werden, wobei aus einer zeitweisen Erhöhung der gemessenen Druckfedersteifigkeit ein Passieren der Sensorik zur Messung der Druckfedersteifigkeit eines Verbindungsabschnittes (9) zwischen Fördergurtteilstücken (8) erkannt wird.

10. Verfahren nach einem der vorhergehenden Ansprüche 7 bis 8,
**dadurch gekennzeichnet,**
**dass** zur Bestimmung einer Abfolge von Verbindungsabschnitten (9) an mindestens einer Position eine Messung eines Spulenstroms oder eine Messung einer Erregung eines Magnetfeldsensors durch den passierenden Fördergurt (2) erfolgt und die Messsignale der Steuereinrichtung (10) zugeleitet werden.

11. Verfahren nach einem der vorhergehenden Verfahrensansprüche ,
**dadurch gekennzeichnet,**
**dass** eine Momentenmessung zur Bestimmung des Energieverbrauchs des Antriebs (7) vorgesehen ist.

12. Verfahren nach einem der vorhergehenden Verfahrensansprüche,
**dadurch gekennzeichnet,**
**dass** ein Referenzgütefaktor für ein Fördergurtteilstück (8) ermittelt wird.

13. Verfahren nach einem vorstehenden Verfahrensanspruch,

**dadurch gekennzeichnet,**
**dass** der breitenbezogene Bewegungswiderstand (F'$_G$) eines Fördergurtteilstückes (8) mittels eines Optimierungsverfahrens ermittelt wird, insbesondere gemäß

$$F'_G = a \cdot F'^b_O$$

mit F'o als breitenbezogener Auflast senkrecht zu einer Tragrolle (6), einem Koeffizient a und einem Exponent b als Parameter, die von den Gurteigenschaften des Fördergurtteilstückes (8) abhängen.

14. Verfahren nach einem der vorhergehenden Verfahrensansprüche,
**dadurch gekennzeichnet,**
**dass** der Gurtförderer (1) in Anlagenabschnitte (13) unterteilbar ist und eine Auswertung der Messwerte bezogen auf die Anlagenabschnitte (13) erfolgt.

15. Verfahren nach einem vorstehenden Verfahrensanspruch,
**dadurch gekennzeichnet,**
**dass** Messwerte Temperaturklassen zugeordnet werden und eine Bestimmung oder Auswertung nur innerhalb einer Temperaturklasse durchgeführt wird.

**Claims**

1. Belt conveyor (1) with at least one control device (10) and with at least one drive (7) for driving a conveyor belt (2) consisting of conveyor belt segments (8) and with at least one carrying roller (6), the conveyor belt (2) having connecting sections (9) between the conveyor belt segments (8), and with a first sensor system (18) for sensing the energy consumption of the drive (7) and with a second sensor system (24, 14) for sensing a loading (3) that can be assigned to a section of the conveyor belt (2),
**characterized**
**in that** a third sensor system (11) is provided for detecting connecting sections (9) between the conveyor belt segments (8) and wherein a correlation function can be applied to a calculated energy demand to bring about an agreement of the calculated energy demand with a measured energy demand for the identification of conveyor belt sections which are distinguished by a low energy consumption, and/or for the identification of installation sections that have a higher energy demand.

2. Belt conveyor (1) according to Claim 1,
**characterized**
**in that** the third sensor system (11) comprises at least one sensor for sensing the compressive spring stiffness of the conveyor belt (2).

3. Belt conveyor (1) according to Claim 1, **characterized in that** a steel cable conveyor belt is provided as the conveyor belt (2) and a coil or at least one magnetic field sensor is provided as the third sensor system (11) for detecting connecting sections (9) by detection of an accumulation of steel in the connecting sections (9).

4. Belt conveyor (1) according to one of the preceding claims, **characterized in that** the third sensor system (11) is fixedly arranged and the conveyor belt (2) is arranged such that it can be driven with respect to the third sensor system (11) by the drive (7).

5. Belt conveyor (1) according to one of the preceding claims, **characterized in that** the first sensor system (18) comprises a torque sensor (20), which is arranged in the drivetrain, for sensing the actual energy consumption of the drive (7).

6. Belt conveyor (1) according to one of the preceding claims, **characterized in that** the torque sensor (20) is provided in a hydrodynamic clutch arranged in the drivetrain.

7. Method for sensing the energy demand of a belt conveyor (1) with at least one drive and a conveyor belt (2) of conveyor belt segments (8) comprising the following method steps:

- sensing the loading distribution of the conveyor belt (2)
- calculating the energy demand of the drive (7) while taking into consideration the loading distribution of the conveyor belt (2)
- sensing the energy consumption of the drive (7) **characterized in that** the following method step is provided:
- applying a correlation function to the calculated energy demand to bring about an agreement of the calculated energy demand with the measured energy consumption on the basis of the conveyor belt segments or on the basis of the installation sections.

8. Method according to Claim 7, **characterized in that**, for determining a variation over time of the position of a conveyor belt segment (8), connecting sections (9) at least of the conveyor belt segment (8) to at least one neighboring conveyor belt segment (8) are sensed.

9. Method according to one of the preceding claims, **characterized in that** a measurement of a compressive spring stiffness of the conveyor belt (2) is performed and the signals are passed on to the control device (10), passing of the sensor system for measuring the compressive spring stiffness of a connecting section (9) between conveyor belt segments (8) being detected from a transient increase in the measured compressive spring stiffness.

10. Method according to either of the preceding Claims 7 and 8, **characterized in that**, for determining a sequence of connecting sections (9) at at least one position, a measurement of a coil current or a measurement of an excitation of a magnetic field sensor by the passing conveyor belt (2) is performed and the measuring signals are passed on to the control device (10).

11. Method according to one of the preceding claims, **characterized in that** a torque measurement is provided for the determination of the energy consumption of the drive (7).

12. Method according to one of the preceding method claims, **characterized in that** a reference quality factor for a conveyor belt segment (8) is determined.

13. Method according to a preceding method claim, **characterized in that** the width-based resistance to movement ($F'_G$) of a conveyor belt segment (8) is determined by means of an optimization method, in particular according to

$$F'_G = a \cdot F'^{b}_O$$

with $F'_O$ as the width-based applied load perpendicular to a carrying roller (6), a coefficient a and an exponent b as parameters which depend on the belt properties of the conveyor belt segment (8).

14. Method according to one of the preceding method claims, **characterized in that** the belt conveyor (1) can be divided into installation sections (13) and an evaluation of the measured values is performed on the basis of the installation sections (13).

15. Method according to a preceding method claim, **characterized in that** the measured values are assigned to temperature classes and a determination or evaluation is only carried out within one temperature class.

**Revendications**

1. Convoyeur à bande (1), comprenant au moins un dispositif de commande (10) et comprenant au moins un mécanisme d'entraînement (7) destiné à entraîner une bande de convoyage (2) constituée de tronçons de bande de convoyage (8) et comprenant au moins un rouleau porteur (6), la bande de convoyage (2) possédant des portions de liaison (9) entre les tronçons de bande de convoyage (8), et comprenant un premier système de détection (18) destiné à détecter la consommation d'énergie du mécanisme d'entraînement (7) et comprenant un deuxième système de détection (24, 14) destiné à détecter une charge (3) qui peut être associée à une portion de la bande de convoyage (2), **caractérisé en ce qu'**un troisième système de détection (11) est présent pour détecter des portions de liaison (9) entre les tronçons de bande de convoyage (8) et une fonction de corrélation pouvant être utilisée sur un besoin énergétique calculé pour provoquer une concordance entre le besoin énergétique calculé et un besoin énergétique mesuré en vue d'identifier les portions de bande de convoyage qui se distinguent par une faible consommation d'énergie et/ou en vue d'identifier les portions de l'équipement qui présentent un besoin énergétique plus élevé.

2. Convoyeur à bande (1) selon la revendication 1, **caractérisé en ce que** le troisième système de détection (11) comporte au moins un capteur destiné à détecter la rigidité de ressort à la pression de la bande de convoyage (2) .

3. Convoyeur à bande (1) selon la revendication 1, **caractérisé en ce que** la bande de convoyage (2) présente est une bande de convoyage à carcasse d'acier et le troisième système de détection (11) présent est une bobine ou au moins un capteur de champ magnétique destiné à détecter les portions de liaison (9) par détection d'une accumulation d'acier dans les portions de liaison (9) .

4. Convoyeur à bande (1) selon l'une des revendications précédentes, **caractérisé en ce que** le troisième système de détection (11) est disposé en position fixe et la bande de convoyage (2) est disposée de manière à pouvoir être entraînée par le mécanisme d'entraînement (7) par rapport au troisième système de détection (11).

5. Convoyeur à bande (1) selon l'une des revendications précédentes, **caractérisé en ce que** le premier système de détection (18) comporte, pour la détection de la consommation d'énergie réelle du mécanisme d'entraînement (7), un capteur de moment (20) qui est disposé dans la chaîne de transmission.

6. Convoyeur à bande (1) selon l'une des revendications précédentes, **caractérisé en ce que** le capteur de moment (20) se trouve dans un accouplement hydrodynamique disposé dans la chaîne de transmission.

7. Procédé de détection du besoin énergétique d'un convoyeur à bande (1) comprenant au moins un mécanisme d'entraînement et une bande de convoyage (2) constituée de tronçons de bande de convoyage (8), comprenant les étapes de procédé suivantes :

   - détection d'une distribution de charge de la bande de convoyage (2),
   - calcul du besoin énergétique du mécanisme d'entraînement (7) en tenant compte de la distribution de charge de la bande de convoyage (2),
   - détection du besoin énergétique du mécanisme d'entraînement (7)

   **caractérisé en ce que** l'étape de procédé suivante est prévue :

   - application d'une fonction de corrélation sur le besoin énergétique calculé pour provoquer une concordance entre le besoin énergétique calculé et le besoin énergétique mesuré en référence aux tronçons de bande de convoyage ou en référence aux portions de l'équipement.

8. Procédé selon la revendication 7, **caractérisé en ce que** pour déterminer un tracé dans le temps de la position d'un tronçon de bande de convoyage (8), des portions de liaison (9) d'au moins le tronçon de bande de convoyage (8) avec au moins un tronçon de bande de convoyage (8) voisin sont détectées.

9. Procédé selon l'une des revendications précédentes, **caractérisé en ce qu'**une mesure d'une rigidité de ressort à la pression de la bande de convoyage (2) est effectuée et les signaux sont acheminés au dispositif de commande (10), un passage du système de détection servant à mesurer la rigidité de ressort à la pression d'une portion de liaison (9) entre des tronçons de bande de convoyage (8) étant reconnu par une augmentation temporaire de la rigidité de ressort à la pression mesurée.

10. Procédé selon l'une des revendications précédentes 7 et 8, **caractérisé en ce qu'**en vue de déterminer une séquence de portions de liaison (9), une mesure d'un courant de bobine ou une mesure d'une excitation d'un capteur de champ magnétique par le passage de la bande de convoyage (2) est effectuée en au moins une position et les signaux de mesure sont acheminés au dispositif de commande (10).

11. Procédé selon l'une des revendications de procédé précédentes, **caractérisé en ce qu'**une mesure du moment est effectuée pour déterminer la consommation d'énergie du mécanisme d'entraînement (7).

12. Procédé selon l'une des revendications de procédé précédentes, **caractérisé en ce qu'**un facteur de qualité de référence pour un tronçon de bande de convoyage (8) est identifié.

13. Procédé selon l'une des revendications de procédé précédentes, **caractérisé en ce que** la résistance au mouvement ($F'_G$) référencée à la largeur d'un tronçon de bande de convoyage (8) est identifiée au moyen d'un procédé d'optimisation, notamment selon

$$F'_G = a.F'_0{}^b$$

où $F'_0$ est une charge appliquée référencée à la largeur perpendiculaire à un rouleau porteur (6), a un coefficient et b un exposant en tant que paramètres qui dépendent des propriétés de qualité du tronçon de bande de convoyage (8).

14. Procédé selon l'une des revendications de procédé précédentes, **caractérisé en ce que** le convoyeur à bande (1) peut être subdivisé en portions d'équipement (13) et une interprétation des valeurs mesurées est effectuée en référence aux portions d'équipement (13).

15. Procédé selon l'une des revendications de procédé précédentes, **caractérisé en ce que** des classes de température sont associées aux valeurs mesurées et une détermination ou une interprétation est uniquement effectuée au sein d'une classe de température.

Fig. 1

$$L = n\Delta L = nv\Delta t$$

**IN DER BESCHREIBUNG AUFGEFÜHRTE DOKUMENTE**

**In der Beschreibung aufgeführte Patentdokumente**

- WO 2008083809 A1

**In der Beschreibung aufgeführte Nicht-Patentliteratur**

- **HINTZ, A.** Einfluß des Gurtaufbaus auf den Energieverbrauch von Gurtförderanlagen. Dissertation Universität Hannover, 1993
- **GEESMANN, F.O.** Experimentelle und theoretische Untersuchungen der Bewegungswiderstände von Gurtförderanlagen. Dissertation Universität Hannover, 2001
- **ZIEGLER, M.** Energetische Optimierung von Fördergurten bei der RWE Power AG. *World of Mining,* Juni 2009
- **ANDREAS MEISTER.** Numerik linearer Gleichungssysteme. Vieweg, 2005
- **WENNEKAMP, T.** Tribologische und rheologische Eigenschaften von Fördergurten. Dissertation Universität Hannover, 2008